# EUROPÄISCHE PATENTSCHRIFT

(11) **EP 1 325 890 B1**
(45) Veröffentlichungstag und Bekanntmachung des Hinweises auf die Patenterteilung: **03.12.2003**
(21) Anmeldenummer: 01130957.2
(22) Anmeldetag: 28.12.2001
(51) Int. Cl.: C02F 9/00, B01D 21/24, B24C 9/00, B01D 21/00

(54) **Verfahren zum Entfernen einer aus Strahlmittel und Beschichtungsstoffresten bestehenden wässrigen Schlammsuspension**
Process to remove an aqueous sludge suspension consisting of shot-blasting abrasives and coatings residuals
Procédé pour l' élimination d'une suspension aqueuse de boues constituée d' agents de sablage et de résidus de matières de revêtement

(43) Veröffentlichungstag der Anmeldung: 09.07.2003
(73) Patentinhaber: Mühlhan Surface Protection International GmbH, 21107 Hamburg (DE)
(72) Erfinder: Greverath, Wulf-Dieter, Dr., 22605 Hamburg (DE); Pöpplau, Jens, Dr., 22297 Hamburg (DE)
(74) Vertreter: Fleck, Thomas, Dr. Dipl.-Chem.

(56) Entgegenhaltungen:
- EP-A- 1 004 398
- WO-A-96/16770
- PATENT ABSTRACTS OF JAPAN vol. 1997, no. 10, 31. Oktober 1997 (1997-10-31) -& JP 09 155109 A (MOCHIZUKI TAKUO;MAEZAWA IND INC), 17. Juni 1997 (1997-06-17)

## Beschreibung

Die vorliegende Erfindung betrifft ein Verfahren zum Entfernen einer aus Strahlmittel und Beschichtungsstoffresten bestehenden wässrigen Schlammsuspension nach dem Oberbegriff des Anspruchs 1.

Ein derartiges Verfahren ist aus der WO 96/16770 A bekannt. Dort wird a) das Gemisch in einem Sammelbehälter mittels Schwerkraft aufgefangen; b) die Förderfähigkeit des Gemisches durch Verdünnung mit Wasser erhöht; c) das verdünnte Gemisch wird zu einem Absetzbehälter mittels Vakuum gefördert; d) das (feste) Strahlmittel mittels Sedimentation vom Wasser getrennt; und das Wasser rezirkuliert. Darüberhinaus offenbart diese vorbekannte Lehre - die Entnahme größerer Mengen an Wasser, die dem Strahlmittel zwecks Verdünnung beigemischt werden; - einen weiteren Sammelbehälter, zu dem das zu behandelnde Gemisch gegebenenfalls mittels Vakuum aus dem Auffangbehälter gefördert werden kann und aus dem das Gemisch zu dem Absetzbehälter weiter gefördert wird.

In der EP-A-1 004 398 wird hingegen eine wässrige Schlammsuspension im Vakuum verdichtet, um die Suspension zu trennen.

Neue Verfahren der Reinigung von Oberflächen zum Korrosionsschutz setzen neben den auch vom Sandstrahlen bekannten trockenen Abrasiven zusätzlich tropfbare Fluide (z.B. Wasser) ein. Im Gegensatz zum trockenen Strahlen, bei dem sich das Abrasiv-Beschichtungsstoff-Rostgemisch leicht durch Absaugen entfernen läßt, entsteht beim nassen Strahlen ein Schlamm aus Abrasiv, Oberflächenrückständen und Flüssigkeit mit einem Volumenanteil von 10% bis 40% Feststoffen. Durch Schwerkraft erfolgt allerdings im realen Einsatz eine Trennung von Festanteilen und Fluid, so daß ein Verfahren benötigt wird, welches in der Lage sein muß, eine große Bandbreite von Rückständen mit weniger als 5% bis mehr als 90% Festanteil aus dem Arbeitsbereich zu entfernen. Erschwerend kommt hinzu, daß bei einem Einsatz in z.B. Schiffen die Zuwegung in den Arbeitsbereich durch Mannlöcher mit ca. 600 mm Durchmesser begrenzt wird und daß die erforderliche Förderhöhe über 30 m liegen kann.

Der Erfindung liegt deshalb die Aufgabe zugrunde, ein Verfahren zum optimierten Aufsaugen zu schaffen, das in der Lage ist, für eine große Bandbreite schlammiger Materialien mit abrasiven Anteilen, die über einen weiten Arbeitsbereich verteilt sind, eine Sammlung und anschließende Förderung über einen Höhenunterschied bis zu 30 m und auch darüber zu erreichen. Diese Aufgabe wird erfindungsgemäß durch das in Anspruch 1 gekennzeichnete Verfahren bzw. durch die im Anspruch 6 gekennzeichnete Vorrichtung gelöst.

Das erfindungsgemäße fünfstufige Verfahren beginnt zunächst mit dem Aufsaugen der wässrigen Schlammsuspension in einen Behälter hinein, in dem eine weitere Verdünnung mit Wasser erforderlich ist, damit eine Förderfähigkeit der verdünnten Suspension gegeben ist, die dann mittels Pumpe einen Höhenunterschied von mindestens 5 m überwinden kann. Abschließend wird erfindungsgemäß dann der Feststoff durch einfache Sedimentation vom Wasser getrennt, welches rezirkuliert wird.

In vorrichtungsgemäßer Hinsicht ist die Kombination der Aufsaugvorrichtung mit der Förderpumpe für die verdünnte Suspension von besonderer erfindungsgemäßer Bedeutung.

Einen weiteren Aspekt der Erfindung bildet die Verwendung der erfindungsgemäßen Vorrichtung zum Einsatz auf Schiffen, wo besondere räumliche Einschränkungen beachtet werden müssen. Erfindungsgemäß wird hier deshalb vorteilhafterweise ein Gehäuse vorgesehen, das einen Durchmesser < 600 mm aufweist.

Weitere Vorteile und Merkmale gehen aus den Unteransprüchen hervor, die zusammen mit dem Hauptanspruch ebenfalls von erfindungsgemäßer Bedeutung sein können.

Im folgenden wird ein bevorzugtes Ausführungsbeispiel der Erfindung unter Bezugnahme auf die Zeichnung näher beschrieben. Es dürfte jedoch einleuchten, daß die Erfindung nicht auf dieses Ausführungsbeispiel beschränkt ist.

Es zeigt:

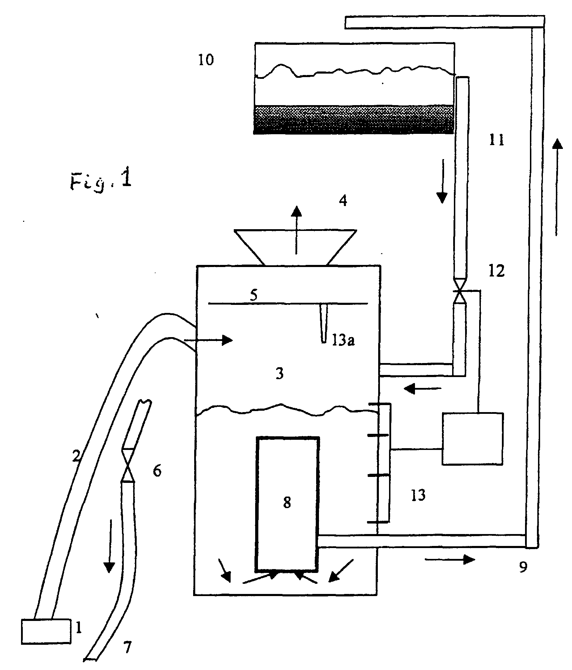

- Fig. 1: eine Schemaskizze der erfindungsgemäßen Vorrichtung, mit der das erfindungsgemäße Verfahren durchgeführt werden kann.

In Fig. 1 wird eine Saugdüse 1 gezeigt, die über ihren Saugschlauch 2 die wässrige Schlammsuspension, die aus einem Schlamm-Beschichtungsstoff-Wassergemisch (nicht gezeigt) besteht, mittels Luftförderung in einen Behälter 3 saugt.

Treibende Kraft für diesen Vorgang ist ein Unterdruck im Behälter 3 gegenüber dem Eintritt in die Saugdüse 1. Idealerweise beträgt das Druckverhältnis Außendruck zu Behälterdruck in etwa 1:0,52 oder mehr (kritisches Druckverhältnis), da dann gerade die maximal erzielbare Luftgeschwindigkeit (Schallgeschwindigkeit der Luft ca. 300 m/s) im Saugschlauch 2 erreicht wird.

Erzeugt wird der Unterdruck über ein Unterdruckaggregat 4 (z.B. einen Injektor) oder durch einen externen Anschluß 4 an ein entsprechendes Aggregat. Durch Schwerkraft fällt die aufgesaugte Suspension nach unten in den Behältersumpf; eine geeignet angeordnete plattenartige Luftumlenkung 5 verhindert ein direktes Ansaugen in das Unterdruckaggregat 4.

Falls an der Saugdüse 1 der Feststoffanteil zu hoch ist, kann über ein Ventil 6 an einer Düse 7 Flüssigkeit zugesetzt werden (wie als separater Teil der Fig. 1 angedeutet) und damit die Förderfähigkeit verbessert werden. Dabei kann die Flüssigkeit aus dem noch zu schildernden Kreislauf der Prozessflüssigkeit oder aber aus z.B. einem Hochdruckreiniger stammen.

Die aufgesaugte Suspension ist bei einem mittleren Feststoffanteil von 30% nicht unmittelbar mit typischen Pumpen zur Schlammbeförderung pumpbar. Der Feststoffanteil birgt die Gefahr der Verstopfung der Pumpe 8 und die Abrasive führen zu einem hohen Verschleiß. Deshalb wird über einen Kreislauf Wasser zugeführt, das den Feststoffanteil auf ca. 3% bis 10% begrenzt. Der Kreislauf arbeitet kontinuierlich, indem über die Druckleitung 9 der Pumpe 8 die verdünnte Suspension aus dem Unterdruckbereich über die erforderliche Förderhöhe in den Normaldruckbereich gepumpt wird. Dort fällt das Gemisch in einen Sedimentbehälter 10. Die Feststoffanteile sedimentieren und die so weitgehend feststofffreie Flüssigkeit läuft über einen Überlauf 11 in den Behälter 3 zurück.

In die Druckleitung 9 können in unterschiedlichen geodätischen Höhen weitere Pumpstufen, bestehend aus einem offenen Behälter und einer über Niveau gesteuerten Schlammpumpe eingebaut werden. Damit werden die Leistungen der Einzelpumpen und damit deren Baugröße/Gewicht reduziert.

Der Sedimentbehälter 10 kann mit einem Beutel (nicht gezeigt) zur Aufnahme der zu entsorgenden Feststoffe ausgekleidet sein.

Die Pumpe 8 läuft, ebenso wie der Unterdruckerzeuger 4, kontinuierlich.

Der Rücklauf der Flüssigkeit wird über ein Ventil 12 geregelt. Stellgröße sind die digitalen Füllstandsensoren 13 oder ein analoges Signal eines Abstandssensors 13a. Auch eine rein mechanische Regelung über den Flüssigkeitsspiegel mit Hilfe eines Schwimmers ist möglich.

Die Gewährleistung, daß ein bestimmter Feststoffanteil nicht überschritten wird, geschieht durch die Dimensionierung der Rohrleitungen 9 und 11 in Verbindung mit dem Querschnitt der Saugleitung 2. Bei geeigneter Auslegung wird am Ventil 12 der Prozeß lediglich "justiert".

Eine typische Auslegung mit einem 50 mm Saugschlauch 2, einer 50 mm Pumpleitung 9 und einem 70 mm Rücklauf fördert bei einer Pumpleistung von 5 kW ca. 25 000 kg Feststoffe in 24 h über eine Höhe von 30 m.

## Patentansprüche

1. Verfahren zum Entfernen einer aus Strahlmittel und Beschichtungsstoffresten bestehenden wässrigen Schlammsuspension, die bei der Reinigung von Oberflächen zum Korrosionsschutz anfällt, mit folgenden Schritten :
a. Aufsaugen der wässrigen Schlammsuspension mittels Luftförderung in einen Behälter (3) hinein,
b. Verdünnen der Suspension mit Wasser,
c. Fördern der verdünnten Suspension mittels einer Pumpe in einen Sedimentbehälter (10),
d. Trennen des Feststoffes vom Wasser mittels Sedimentation und
e. Rezirkulation des abgetrennten Wassers,
**dadurch gekennzeichnet, daß**
in dem Behälter (3) die treibende Kraft für den Saugvorgang ein Unterdruck ist, wobei das Druckverhältnis Außendruck zu Behälterdruck 1:0,52 oder mehr beträgt, wobei die wässrige Suspension bis zu einem Feststoffanteil bis zu maximal 10 Vol.% verdünnt wird, und wobei die verdünnte Suspension kontinuierlich über einen Höhenunterschied von > 5m gefördert wird.

2. Verfahren nach Anspruch 1, **dadurch gekennzeichnet, daß** die in der Stufe c eingesetzte Pumpe eine Kreisel- oder Membranpumpe ist.

3. Verfahren nach Anspruch 1 und 2, **dadurch gekennzeichnet, daß** die Suspension in der Stufe b auf einen Feststoffanteil von etwa 5 Vol% mit Wasser verdünnt wird.

4. Verfahren nach einem oder mehreren der Ansprüche 1 bis 3, **dadurch gekennzeichnet, daß** die kontinuierliche Förderung in der Stufe c einen Höhenunterschied > 30 m überwindet.

5. Verfahren nach Anspruch 1 bis 4, **dadurch gekennzeichnet, daß** das Hochpumpen der Stufe c mehrstufig durchgeführt wird.

## Claims

1. Method for removing an aqueous slurry suspension comprising blast media and coating substance residues produced when cleaning surfaces for corrosion protection purposes and involving the following steps:
a. sucking the aqueous slurry suspension into a container (3) by air feed,
b. diluting the suspension with water,
c. feeding the dilute solution into a sediment container (10) using a pump,
d. separating the solids from the water by sedimentation and
e. recycling the separated water,
**characterized in that**
in container (3) the driving force for the suction process is a vacuum, the pressure ratio of external pressure to container pressure being 1:0.52 or higher, the aqueous suspension being diluted to a solids content of up to max 10 vol.% and the dilute suspension is continuously fed over a height difference of > 5 m.

2. Method according to claim 1, **characterized in that** the pump used in step c is a centrifugal or diaphragm pump.

3. Method according to claim 1 and 2, **characterized in that** the suspension in step b is diluted with water to a solids content of approximately 5 vol.%.

4. Method according to one or more of the claims 1 to 3, **characterized in that** the continuous feeding in step c overcomes a height difference > 30 m.

5. Method according to claim 1 to 4, **characterized in that** the pumping up of step c is performed in multistage manner.

## Revendications

1. Procédé de retrait d'une suspension de boue aqueuse composée d'abrasifs et de matières résiduelles de revêtement, résultant du nettoyage des surfaces pour la protection anti-corrosion, comprenant les étapes suivantes :
a. Aspiration de la suspension de boue aqueuse au moyen du refoulement d'air dans un réservoir (3),
b. Dilution à l'eau de la suspension,
c. Acheminement de la suspension diluée au moyen d'une pompe vers un réservoir de sédimentation (10),
d. Séparation entre la matière solide et l'eau au moyen de la sédimentation, et
e. Remise en circulation de l'eau extraite,
**caractérisé en ce que**,
la force de propulsion dans le réservoir (3) pour le procédé d'aspiration est une dépression, moyennant quoi le rapport de pression entre la pression externe et la pression dans le réservoir est de 1 :0,52 ou plus, moyennant quoi la suspension aqueuse est diluée jusqu'à une teneur maximale en matière solide de 10 % de volume et moyennant quoi la suspension diluée est acheminée en permanence au delà d'une différence de niveau > 5 m.

2. Procédé selon la revendication 1, **caractérisé en ce que** la pompe de l'étape c est une pompe centrifuge ou une pompe à diaphragme.

3. Procédé selon la revendication 1 et 2, **caractérisé en ce que** la suspension de l'étape b est diluée avec de l'eau ayant une teneur en matières solides d'environ 5 % de volume.

4. Procédé selon une ou plusieurs des revendications 1 à 3, **caractérisé en ce que** l'acheminement continu franchit une différence de niveau > 30 m dans l'étape c.

5. Procédé selon la revendication 1 à 4, **caractérisé en ce que** le pompage en hauteur de l'étape c est réalisé sur plusieurs étages.
